# EUROPEAN PATENT APPLICATION

(11) **EP 1 821 246 A2**
(43) Date of publication of application: **22.08.2007**
(21) Application number: 06120728.8
(22) Date of filing: 15.09.2006
(51) Int. Cl.: G06N 5/04, G05B 13/02

(54) **Controlling of an autonomous platform**

(30) Priority: 16.02.2006 US 766873 P; 23.03.2006 WO PCT/EP2006/060980
(71) Applicant: SAAB AB, 581 88 Linköping (SE)
(72) Inventor: Hagelin, Hans-Ove, 585 97 Linköping (SE); Ehlin, Johan, 582 21 Linköping (SE)
(74) Representative: Herbjörnsen, Rut

(57) **Abstract**

The present invention relates to a system comprising a platform and at least one control unit being in a distanced relationship, wherein
said platform comprises a decision maker and a plurality of subsystems;
the decision maker is arranged to control the subsystems depending upon ability requests associated with predetermined behaviours;
the decision maker is arranged to perform said control by means of at least one rule packet determined from a set of rule packets (R1-RN);
wherein
said at least one control unit is provided with at least one of a rule packet determined from said set of rule packets (R1-RN) allowing an operator of said control unit to interact with the platform regarding said at least one rule packet.

## Description

### Technical field

The present invention relates in general to a system for controlling platforms. In particular the invention relates a system for controlling autonomous platforms, such as Unmanned Aerial Vehicles (UAV's).

Furthermore, the invention relates to software adapted to perform control functionality of the system for controlling platforms, when executed on a computer.

### Background of the invention

Areas where autonomous platforms are useful are numerous. For example in situations and environments where humans may have difficulties to operate platforms manually, such as underwater or in space, but also in other situations, such as in civilian and military air space. Conceivable missions in civilian and military air space may be any of different flight missions in international operations or civilian applications such as border monitoring and reconnaissance missions regarding forest fires, for example.

An autonomous platform is in general provided with an autonomous kernel or decision making unit arranged to control the platform depending upon the environment and type of mission to be accomplished. For the autonomous platforms to be allowed to operate in e.g. civilian airspace, it is imperative that the platforms fulfil certain safety regulations. However, there are today difficulties associated with manual supervision of the platform performed by an operator, especially in stressful and complex situations, such as air-to-air combat situations involving a plurality of other flying platforms, such as fighters.

In EP1462889A2, a device with a supervising unit arranged to handle a rule system for the behaviour of an entity is described, The rule system described comprises a first and second rule handler for handling a set of rules stored in at least one storage member in the device. The first and second rule handler can work in parallel with each other and both simultaneously present information concerning the rule handling. The device also has a user interface for presenting this information to a user.

### Summary of the invention

An object according to an aspect of present invention is to provide a flexible system for controlling an autonomous platform.

An object according to an aspect of present invention is to provide a system allowing improved and facilitated capability of monitoring of a decision making unit of a platform.

An object according to an aspect of present invention is to provide an adjustable autonomous system involving controlling/monitoring a platform.

An aspect of the invention relates to the problem of achieving a user friendly means capable of allowing communication between at least one operator and an autonomous kernel of a platform, which provides a safer driving of the platform.

These problems are solved by a system comprising a platform and at least one control unit being in a distanced relationship, wherein
said platform comprises a decision maker and a plurality of subsystems;
the decision maker is arranged to control the subsystems depending upon ability requests associated with predetermined behaviours;
the decision maker is arranged to perform said control by means of at least one rule packet determined from a set of rule packets;
wherein
said at least one control unit is provided with at least one of a rule packet determined from said set of rule packets allowing an operator of said control unit to interact with the platform regarding said at least one rule packet.

Preferably said at least one control unit is a plurality of control units, wherein each control unit is provided with an arbitrary number of rule packets determined from said set of rule packets.

Preferably at least two control units each is provided with at least one rule packet determined from said set of rule packets, which are substantially identical with each other.

Preferably the system comprises means for allowing an operator of said control unit to monitor and supervise the decision maker regarding said at least one rule packet.

Preferably the system comprises means for allowing the operator of said at least one control unit to interact with the platform regarding said at least one rule packet on-line.

Preferably the at least one control unit comprises an operator interface providing means for displaying status information of the decision maker, and
means for overriding decisions made by the decision maker on-line.

Preferably the at least one control unit comprises means for generating at least one additional rule packet, and
means for transmitting said generated rule packet to the decision maker for installation and implementation.

Preferably the platform is a flying vehicle, preferably a vehicle selected from the group consisting of: an aircraft, an airplane, and a helicopter, or where the platform is a watercraft or an under watercraft, preferably selected from the group consisting of: a boat, a ship, and a submarine, or wherein the platform is a land vehicle, preferably a land vehicle selected from the group consisting of: an automobile, a train, and a cross-country vehicle.

These problems are also solved by a computer programme comprising a programme code for within a system comprising a platform and at least one control unit being in a distanced relationship allowing an operator of the control unit to interact with the platform regarding at least one rule packet, when said computer programme is run on a computer;
wherein said platform comprises a decision maker and a plurality of subsystems;
the decision maker is arranged to control the subsystems depending upon ability requests associated with predetermined behaviours;
the decision maker is arranged to perform said control by means of at least one rule packet determined from a set of rule packets;
wherein
said at least one control unit is provided with at least one of a rule packet determined from said set of rule packets.

One advantage of the system according to an aspect of the invention is that an increased mission flexibility of the platform is achieved. This holds true because of the possibility for the at least one operator to interact with the platform while supervising decisions taken autonomously within the platform.

One positive outcome of the system according to the invention is that an
adjustable degree of autonomy is achieved by providing a dynamic
architecture of the system, which may be subjected to tailored modifications.

The system according to the invention provides a more robust tool for on-line monitoring of decisions taken by the autonomous platform. The system according to the invention provides a more robust tool for on-line status monitoring of the autonomous platform by allowing a clear insight into the decision maker thereof. Operators located at a distance from the platform may experience a pressure relieve as a consequence of having access to at least parts of the decision making unit of the platform by means of a user-friendly interface. This also allows reduced stress in stressful situations.

The present invention further provides improved accuracy of information required to allow operators to make appropriate command interrupt decisions and thereby also provides an improved back-up safety system of the platform.

A beneficial contribution resulting from application of a method according to an aspect of the invention is improved overview and understanding of the decisions taken by the autonomous kernel of the platform, and further leads to a reduced amount of information provided to the operators, so as to provide a better chance to override faulty decisions made by the decision maker during complex flight situations.

The system is arranged for reliable communication between an operator and the autonomous kernel of the platform wherein no coding or compilation is required before updating the rule-based decision system.

Additional objects, advantages and novel features of the present invention will become apparent to those skilled in the art from the following details, as well as by practice of the invention. While the invention is described below, it should be understood that the invention is not limited to the specific details disclosed, A person skilled in the art having access to the teachings herein will recognise additional applications, modifications and embodiments in other fields, which are within the scope af the invention.

### Brief description of the drawings

For a more complete understanding of the present invention and further objects and advantages thereof, reference is now made to the examples shown in the accompanying drawings, in which like reference numerals refer to like elements, and in which:
Fig. 1 schematically illustrates a system according to an aspect of the invention.
Fig. 2 schematically illustrates a part of the system in greater detail according to an aspect of the invention.
Fig. 3 schematically illustrates a system according to an aspect of the invention.
Fig. 4 schematically illustrates a system according to an aspect of the invention.
Fig. 5 shows an editor state window according to an aspect of the invention.
Fig. 6 shows an editor rule window according to an aspect of the invention.
Fig. 7 schematically illustrates an apparatus according to an aspect of the invention.

### Detailed description of the drawings

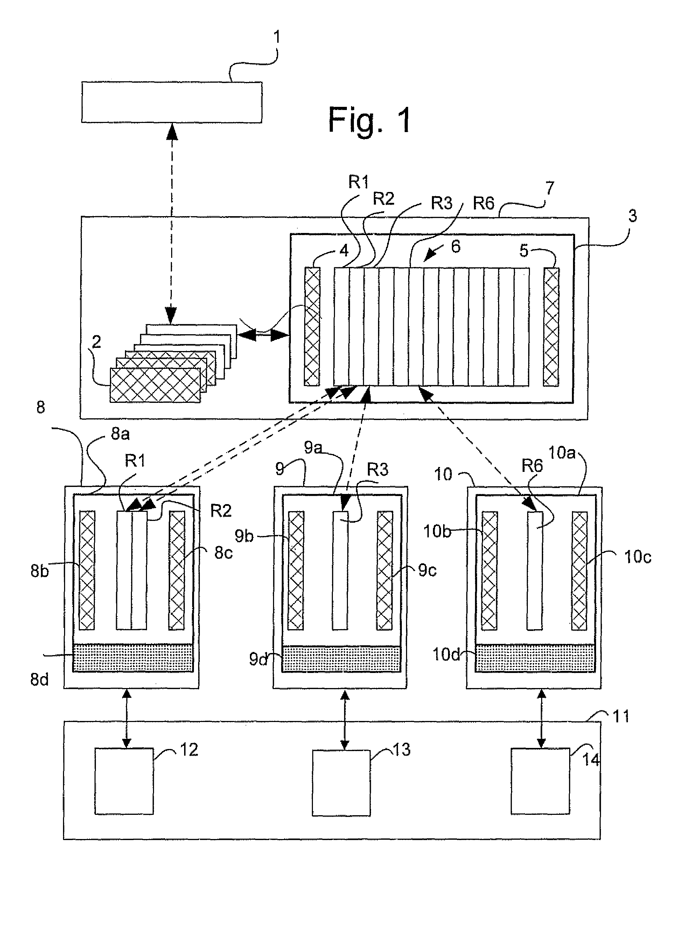

Fig. 1 illustrates a schematic view of a first embodiment of the present invention and is divided into two main parts, a platform 7 and a control station (UCS) 11.

The platform 7 is preferably an autonomous platform, such as an unmanned aerial vehicle (UAV). The platform may be an airplane, such as a passenger traffic airplane. Alternatively the airplane can be a military aircraft, such as a fighter, bomber, reconnaissance airplane, or a combination thereof The autonomous platform can also be any kind of a helicopter, robot or missile.

It should be noted that the platform 7 alternatively can be a ground vehicle, water craft or underwater craft, e.g. an automobile, ship or submarine. Alternatively, the platform 7 can be a space craft or a satellite. The platform 7 comprises an autonomous kernel comprising a decision maker 3.

The platform 7 comprises a plurality of subsystems 2, such as ACAS (Anti Collision Avoidance System), re-routing planning system or radar system, responsive to the environment 1 surrounding the platform 7. Subsystems which are arranged to order abilities are referred to as actors. An ability comprises at least one task. A task comprises at least one behaviour instruction referring to at least one of the groups Guidance, Sensor, Payload and Communication.

Further, the platform comprises the decision maker 3, which is arranged for communication with at least one operator communication device 8, 9, 10, having an operator interface 8a, 9a, 10a, respectively. The operator interfaces 8a, 9a, 10a provide and presents automatically generated user interfaces to operators 12, 13, 14, e.g. commanders, mission leaders, air traffic controllers etc., in the control station 11. Thus, operational personnel of different competencies may work with an operator interface particularly relating to rule packets of their respective competence or field of rights to make decisions.

The decision maker 3, which constitute a part of the autonomy kernel of the platform, is built up by means of a rule-based decision system. The behavioural rules of the rule-based decision system are grouped in rule packets 6. A rule packet 6 comprises an arbitrary number of rules for behaviour generated from premises, represented as the logical magnitudes preconditions 4 and conclusions 5. The individual packets of rules 6 are denoted "RX", where X is an index number. The general idea of how the rule-based system operates will be appreciated by the following.

A control station (UCS) 11 is arranged to allow operators 12, 13, 14 to communicate with the decision maker 3 via operator interfaces 8a, 9a and 10a, respectively. The number of operators 12, 13, 14 and operator interfaces 8a, 9a, 10a should not be considered restricted to the number of operators 12, 13, 14 and operator interfaces 8a, 9a, 10a shown in Fig.1, but should be considered extendable to any desired number of operators and operator interfaces. In this particular example there is illustrated three operators and three corresponding operator interfaces. However, the number of operators does not necessarily directly correspond to the number of operator interfaces. For example, according to another example there may be two operators working simultaneously with the same operator interface.

The foundation for the operator interfaces 8a, 9a, 10a is substantially identical to the rule-based decision system that is provided in the decision maker 3, e.g. the preconditions 8b, 9b, 10b, and the conclusions 8c, 9c, 10c, are of the same structure as the preconditions 4 and the conclusion 5 in the UAV, respectively. This entails that the operator interfaces 8a, 9a, 10a are generated automatically by the same rule handling tools as the corresponding ones in the decision maker 3. More specific, as illustrated in Fig. 1 the operator 12 deals with rule packets R1 and R2 by means of operator interface 8a. The operator 13 deals with rule packet R3 by means of operator interface 9a. Operator 14 deals with rule packet R6 by means of operator interface 10a. It should be noted that, according to this embodiment, the preconditions 4 and the conclusion 5 of the decision making unit 3 corresponds with preconditions 8b and conclusion 8c in the operator interface 8a. Similarly, the preconditions 4 and the conclusion 5 of the decision making unit 3 corresponds with preconditions 9b and conclusion 9c in the operator interface 9a. Similarly, the preconditions 4 and the conclusion 5 of the decision making unit 3 corresponds with preconditions 10b and conclusion 10c in the operator interface 10a.

An operator 12, 13 or 14 is provided with full insight and supervision possibility of a decision process of the decision maker 3 regarding specific rule packages provided at a respective interface 8a, 9a or 10a.

According to one embodiment an operator has access to a simulation system 8d, 9d, or 10d. The simulation system is arranged to perform simulations relevant for an updating procedure regarding modification of an existing rule packet or creation of a new rule packet. Thus, an existing rule packet or a created new rule packet may be test simulated before transmitted to the decision maker 3 in an updating procedure. Alternatively, the operators have common access to one simulation system,

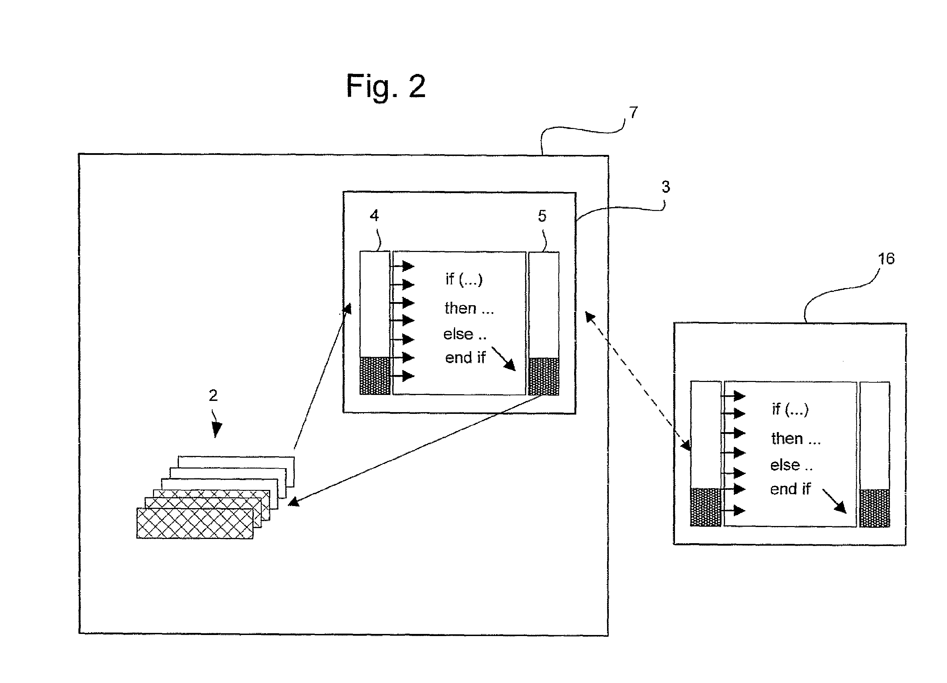

Fig. 2 further illustrates an example interaction between an operator interface 16, which could be any one of the operator interfaces 8a, 9a, 10a from Fig. 1, and the decision maker 3 in the UAV 7. The subsystems 2 an either be non-requesting or requesting subsystems, as mentioned above. The non-requesting autonomous subsystems (no pattern) 2 provide the decision maker 3 with input signals. The inputs signals from the non-requesting subsystems and ability requests are fed to the decision maker for further processing and there provide basis for the preconditions 4, which contain internal variables. The requesting autonomous subsystems (actors) are illustrated with a pattern

For each of the requested ability, the decision maker 3, based on the preconditions 4, if prioritized, generates an appropriate behaviour. The decision maker 3 can enforce this behaviour by transferring it to the control subsystems 2 as control signals. Installing of fixed and dynamic rule packets in the decision maker 3 allows for a robust adjustable degree of autonomy. An operator can also run a simulation in a simulation system, illustrated in Fig. 1 as 8d, 9d, 10d, before implementing it in the platform 7, for example, to try out if a different predetermined rule or rule packet would result in a more desired behaviour.

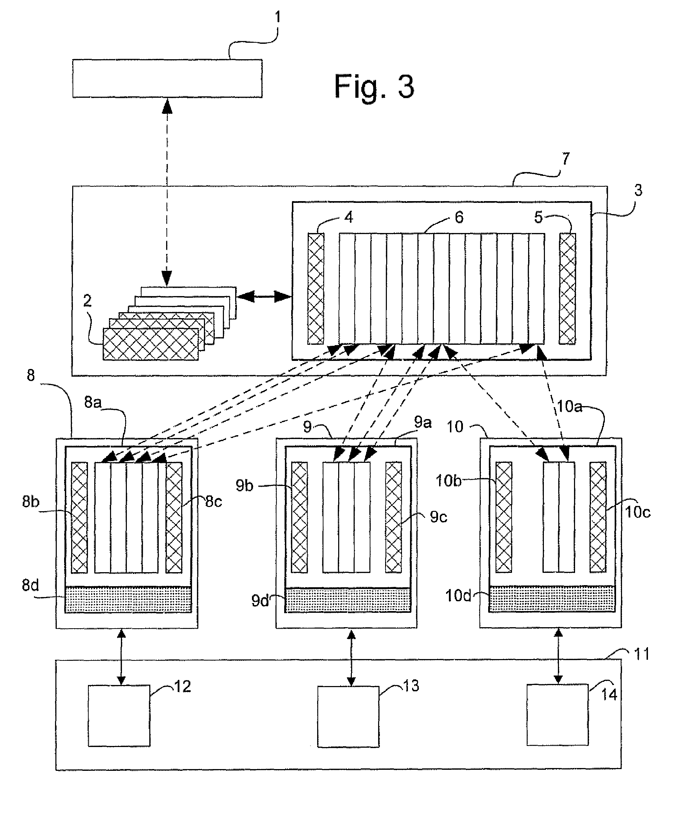

Fig. 3 shows a second embodiment of the present invention which illustrates the flexibility of the present invention. As can be seen in Fig. 3 it is possible for each of several operators 12, 13, 14, who have an interest in following or affecting the decision maker 3, to copy, or mirror, the same or different desired rule packets 6 into their operator interfaces 8, 9, 10. Example of such an operator 12, 13, 14 is a field commander who wishes to utilize informational services that the decision maker 3 autonomously can release during its mission or an operator wishing to supervise decision making concerning a fuel system etc,

Illustrated is the figure is that different operators can have access to the same rule package as another operator. According to this example the operator 12 has access to the rule packets R1, R2, R4 and R13. The operator 13 has access to monitor and/or control functions relating to the rule packets R4 (same as for the operator 12), R6 and R7. The operator 14 has access to the rule packets R7 and R13.

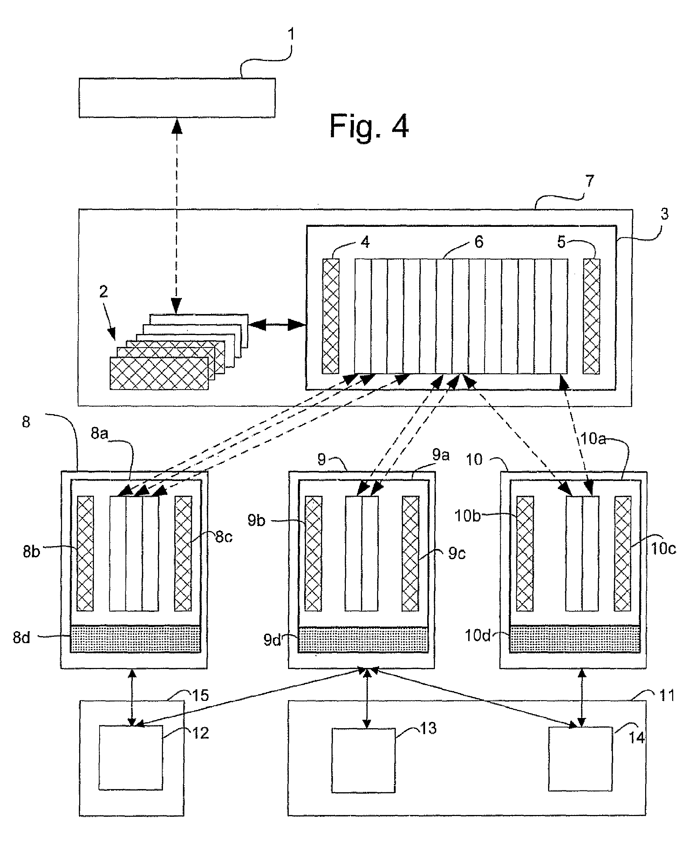

Fig. 4 shows a third embodiment of the present invention further illustrating the flexibility of the present invention. In addition to further illustrate the possibility for several operators 12, 13, 14 to copy, or mirror, desired rule packets 6 into their operator interfaces 8a, 9a, 10a, the embodiment also shows that not all operators 12, 13,14 have to be positioned at the same location or even in the same control station. A control station 15, comprising the operator 12, is shown positioned at a remote location from the control station 11, comprising the operators 13, 14. Fig. 4 also shows that an operator, independent of location, also could be given access to other operators' interfaces.

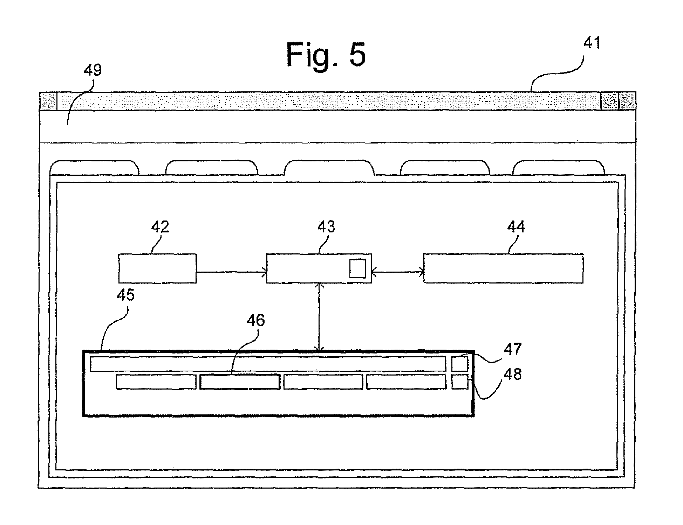

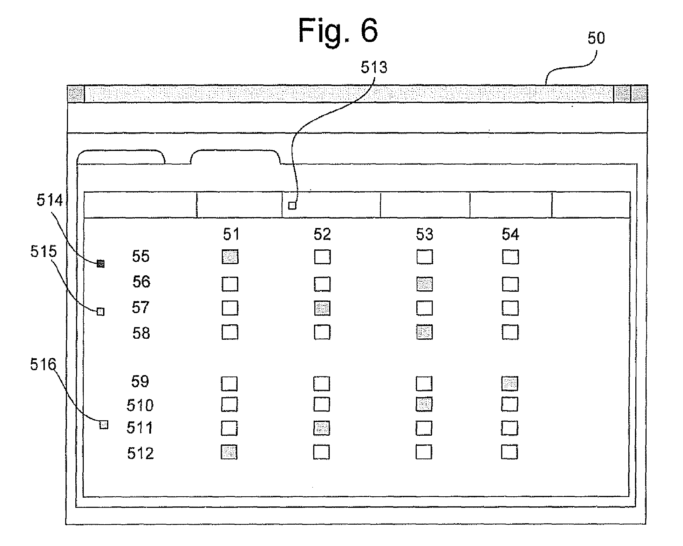

Fig. 5 and Fig. 6 illustrates how an operator, via an automatically generated operator interface, can follow rule execution, study the basis for decisions and adjust the degree of autonomy in the UAV in-flight, e.g. by handling on-line rule transmissions and updates,

Fig. 5 shows an editor state window 41 which illustrates how rule-based system of the decision maker is structured as a serial structured state tree. A state network comprises nodes 42, 43, 44, 45 and arcs, where every node contains a grouping of rule sets. The state network can contain isolated nodes and also isolated subsections af the network. An ongoing state 4.5 being executed is marked with a black border.

In Fig. 6, an editor rule window 50 is shown for the ongoing black border state 45 in Fig. 5. The rules are written up like columns in a matrix. Each rule is assigned an arbitrary name 51, 52, 53, 54 that also appears in state node in the state network, for example, the arbitrary rule name 52 in Fig, 6 also appears at 46 in Fig. 5. There is a marking 513 above the name indicating that the rule is being executed. A marking, not shown, indicating the execution of a rule, can also be displayed in the state network window 41 in Fig. 5.

An operator can study the basis for the decisions made by the decision maker in the platform through the interface editor rule window 50 of Fig. 6. There are colour markings 514, 515 to the left of the premises 55, 56, 57, 58. A green colour marking indicates true premise and a red colour marking indicates a false premise.
Similar colour marking is applied to the left of the conclusions 59, 510, 511, 512, as is applicable, for the execution of a rule.

It is possible for an operator to select the name of an intended rule in the state window 41 for immediate execution. Also, an operator can use a "padlock" function 47 provided in the state window 41, to lock or unlock every state and also every rule packet that is located beside each state and rule packet. An operator can also lock a rule packet 46 by using the "padlock" function 48 beside the rule packets.

The degree of autonomy for the decision maker of the platform can be adjusted by an operator by simple writing new complementary rules in the rule window 50 and/or by making alterations in the state window 41. When having made such alterations or written complementary rules, the operator can select "Save and Update" under "File" in the menu of the editor state window, The new rule or alteration is then immediately implemented to form a basis for decisions in a simulation or in the decision maker in the platform. This can also be done online while the platform is in-flight.

In building an actual decision maker in the autonomous system of a platform, in accordance with the present invention, an automatic interface to the operator is created and provides for an adjustable degree of autonomy on several levels. By affording the operator complete oversight with regard to the basis for decision making and decisions about behaviour, as taken by the decision maker, the operator is able to override a decision taken by the decision maker in the platform by either selecting another predetermined rule, rule packet or by issuing an online formulation of a new rule or new rule set and then transmitting and updating such a formulation over a connected uplink. The operator/operators can generate such rules without needing to recourse to coding and compilation by using the existing parametrical premises and conclusions.

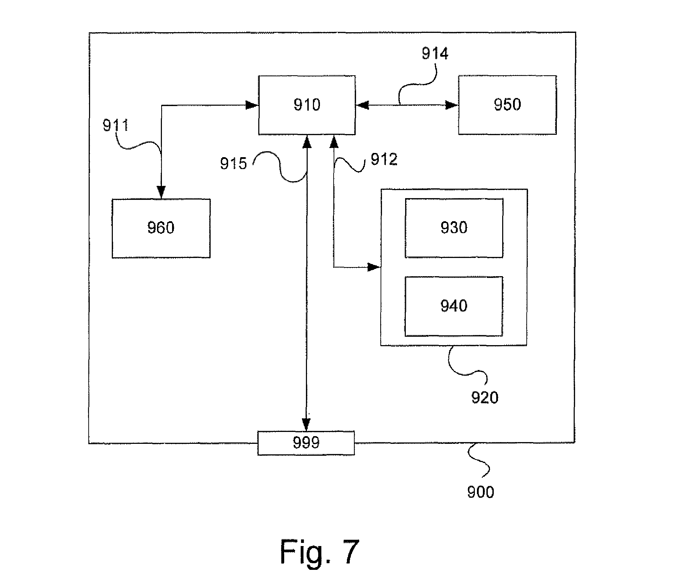

With reference to Figure 7, a diagram of one embodiment of an apparatus 900 is shown. The apparatus 900 may comprise a communication terminal, such as 8, 9 or 10. Apparatus 900 comprises a non-volatile memory 920, a data processing device 910 and a read/write memory 950. Non-volatile memory 920 has a first memory portion 930 wherein a computer program, such as an operating system, is stored for controlling the function of apparatus 900, Further, apparatus 900 comprises a bus controller, a serial communication port, I/O-means, an A/D-converter, a time date entry and transmission unit, an event counter and an interrupt controller (not shown). Non-volatile memory 920 also has a second memory portion 940.

A computer program comprising routines for autonomous controlling of control systems of a platform is provided. The program may be stored in an executable manner or in a compressed state in a separate memory 960 and/or in read/write memory 950.

When it is stated that data processing device 910 performs a certain function it should be understood that data processing device 910 performs a certain part of the program which is stored in separate memory 960, or a certain part of the program which is stored in read/write memory 950.

Data processing device 910 may communicate with a data port 999 by means of a data bus 915. Non-volatile memory 920 is adapted for communication with data processing device 910 via a data bus 912. Separate memory 960 is adapted to communicate with data processing device 910 via a data bus 911. Read/write memory 950 is adapted to communicate with data processing device 910 via a data bus 914.

When data is received on data port 999 it is temporarily stored in second memory portion 940. When the received input data has been temporarily stored, data processing device 910 is set up to perform execution of code in a manner described above. According to one embodiment, data received on data port 999 comprises information such as decision basis provided as signals generated by the decision maker 3. This information can be used by apparatus 900 so as to perform monitoring of the decision maker 3 according to the invention. Parts of the methods described herein can be performed by apparatus 900 by means of data processing device 910 running the program stored in separate memory 960 or read/write memory 950. When apparatus 900 runs the program, parts of the procedures described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

An embodiment of the present invention is directed to a system arranged to supervise and/or control the behaviour of an autonomous platform, wherein said autonomous platform comprises an autonomous decision system arranged with a rule handler which automatically executes rules according to a predetermined program for the rule handling. The system comprises at least one control unit, wherein each of said control units comprises a user interface arranged with display means for presenting information to a user/operator of the control unit and input means for receiving instructions from a user/operator to the control unit,
wherein the user interface in each of said at least one control unit is arranged to receive user/operator instructions to the control unit, via said input means, comprising information indicating limited rule handling information in said automatic rule handler, and
display to a user/operator of the control unit, via said display means, said indicated limited rule handling information in said automatic rule handler at the same time as the automatic rule handler carries out the rule handling;
each of said at least one control unit is arranged to,
depending upon said user/operator instructions receive said indicated limited rule handling information from said rule handler at the same time as said automatic rule handler carries out the rule handling,
wherein said indicated limited rule handling information comprises all or a portion of the rule handling information in said automatic rule handler.

## Claims

1. System comprising a platform and at least one control unit (11; 8, 9, 10) being in a distanced relationship, wherein
said platform comprises a decision maker and a plurality of subsystems;
the decision maker is arranged to control the subsystems depending upon ability requests associated with predetermined behaviours;
the decision maker is arranged to perform said control by means of at least one rule packet determined from a set of rule packets (R1-RN);
wherein
said at least one control unit is provided with at least one of a rule packet determined from said set of rule packets (R1-RN) allowing an operator of said control unit to interact with the platform regarding said at least one rule packet.

2. System according to claim 1, **characterized in that**
said at least one control unit is a plurality of control units, wherein each control unit is provided with an arbitrary number af rule packets determined from said set of rule packets (R1-RN).

3. System according to claim 1 or 2, **characterized in that** at least two control units each is provided with at least one rule packet determined from said set of rule packets (R1-RN), which are substantially identical with each other.

4. System according to any of claims 1-3, **characterized by**
means for allowing an operator of said control unit to monitor and supervise the decision maker regarding said at least one rule packet.

5. System according to any of the claims 1-4, **characterized by**
means for allowing the operator of said at least one control unit to interact with the platform regarding said at least one rule packet on-line.

6. System according to any of claims 1-5, **characterized in that**
the at least one control unit comprises an operator interface providing means for displaying status information of the decision maker, and
means for overriding decisions made by the decision maker on-line.

7. System according to any of claims 1-6, **characterized in that**
the at least one control unit comprises means for generating at least one additional rule packet, and
means for transmitting said generated rule packet to the decision maker for installation and implementation.

8. System according to any of claims 1-7, wherein the platform is a flying vehicle, preferably a vehicle selected from the group consisting of: an aircraft, an airplane, and a helicopter, or where the platform is a watercraft or an under watercraft, pref erably selected from the group consisting of: a boat, a ship, and a submarine, or
wherein the platform is a land vehicle, preferably a land vehicle selected from the group consisting of: an automobile, a train, and a cross-country vehicle.

9. Computer programme comprising a programme code for within a system comprising a platform and at least one control unit being in a distanced relationship allowing an operator of the control unit to interact with the platform regarding at least one rule packet, when said computer programme is run on a computer;
wherein said platform comprises a decision maker and a plurality of subsystems; the decision maker is arranged to control the subsystems depending upon ability requests associated with predetermined behaviours;
the decision maker is arranged to perform said control by means of at least one rule packet determined from a set of rule packets (R1-RN);
wherein
said at least one control unit is provided with at least one of a rule packet determined from said set of rule packets (R1-RN).
